# EUROPEAN PATENT APPLICATION

(11) **EP 2 830 267 A1**
(43) Date of publication of application: **28.01.2015**
(21) Application number: 13763930.8
(22) Date of filing: 18.03.2013
(51) Int. Cl.: H04L 12/717, H04L 12/70, H04L 12/803

(54) **CONTROL APPARATUS, COMMUNICATION SYSTEM, NODE CONTROL METHOD AND PROGRAM**

(30) Priority: 19.03.2012 JP 2012062220
(71) Applicant: NEC Corporation, Tokyo 108-8001 (JP)
(72) Inventor: OIKAWA, Seiji, Tokyo 108-8001 (JP); TAKASHIMA, Masanori, Tokyo 108-8001 (JP)
(74) Representative: Robson, Aidan John
(86) International application number: PCT/JP2013/057602
(87) International publication number: WO 2013/141191

(57) **Abstract**

The present invention prevents occurrence of phenomena such as non-arrival of packets when non-compatible apparatuses are connected to a centralized-control-type network. In a network comprising: a first node(s) controlled by a control apparatus in a centralized manner; a second node(s) storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination; and the control apparatus, the control apparatus causes the first node(s) connected to the second node(s) to transmit a destination learning packet to the second node(s) to cause the second node(s) to learn information about an address(es) to which packets can be forwarded from a port(s) of the second node(s) at predetermined time intervals.

## Description

### TECHNICAL FIELD

### (REFERENCE TO RELATED APPLICATION)

The present invention is based upon and claims the benefit of the priority of Japanese patent application No. 2012-062220, filed on March 19, 2012, the disclosure of which is incorporated herein in its entirety by reference thereto.

The present invention relates to a control apparatus, a communication system, a node control method, and a program. In particular, it relates to: a control apparatus that realizes end-to-end communications by controlling subordinate nodes thereof; a communication system; a node control method; and a program.

### BACKGROUND

In recent years, a technique referred to as OpenFlow has been proposed (see PATENT LITERATURE 1 and NON-PATENT LITERATUREs 1 and 2). OpenFlow recognizes communications as end-to-end flows and performs path control, failure recovery, load balancing, and optimization on a per-flow basis. An OpenFlow switch that functions as a relay apparatus includes a secure channel for communication with an OpenFlow controller serving as a control apparatus and operates in accordance with a flow table added or rewritten by the OpenFlow controller as appropriate. In the flow table, a set of the following three is defined for each flow: matching rules (Header Fields) to match against packet headers; flow statistical information (Counters); and instructions that define processing contents applied to packets that match the matching rules (Header Fields) (see "4.1 Flow Table" in NON-PATENT LITERATURE 2).

For example, when the OpenFlow switch receives a packet, the OpenFlow switch searches the flow table for an entry having a matching rule that matches header information of the received packet. If, as a result of the search, the OpenFlow switch finds an entry matching the received packet, the OpenFlow switch updates the flow statistical information (Counters) and processes the received packet based on a processing content (packet transmission from a specified port, flooding, dropping, etc.) written in the action field of the entry. If, as a result of the search, the OpenFlow switch does not find an entry matching the received packet, the OpenFlow switch forwards the received packet to the OpenFlow controller via the secure channel and requests the OpenFlow controller to determine a packet path based on a source/destination of the received packet. After receiving a flow entry that realizes the path, the OpenFlow switch updates the flow table. In this way, by using an entry stored in the flow table as a processing rule, the OpenFlow switch performs packet forwarding.

### CITATION LIST

### PATENT LITERATURE

### [PATENT LITERATURE 1]

International Publication No. WO2008/095010A1

### NON-PATENT LITERATURE

[NON-PATENT LITERATURE 1]
   Nick McKeown, and seven others, "OpenFlow: Enabling Innovation in Campus Networks," [online], [searched on February 14, 2012], Internet <URL: http://www.openflow.org/documents/openflow-wp-latest.pdf>
[NON-PATENT LITERATURE 2]
   "OpenFlow Switch Specification" Version 1.1.0 Implemented (Wire Protocol 0x02) [online], [searched on February 14, 2012], Internet <URL:http://www.openflow.org/documents/openflow-spec-v1.1.0.pdf>

### SUMMARY

### TECHNICAL PROBLEM

The following analysis has been given by the present inventors. There are cases in which apparatuses not compatible with the OpenFlow protocol in NON-PATENT LITERATURE 2 such as layer 2 switches (these apparatuses not compatible with a centralized-control-type network will hereinafter be referred to as "non-compatible apparatuses") are connected to a network, such as the above OpenFlow network, in which a control apparatus realizes communication by controlling subordinate nodes in a centralized manner. In such cases, if a non-compatible apparatus causes an error in learning a MAC (Media Access Control) address table, performing aging processing, or receiving an ARP (Address Resolution Protocol) packet, packets could not be forwarded on a path intended by the control apparatus or flooding could be caused. Consequently, communication could be disconnected.

An object of the present invention is to provide a control apparatus, a communication system, a node control method, and a program that can contribute to prevention of non-arrival of packets and the like when non-compatible apparatuses are connected to the above centralized-control-type network.

### SOLUTION TO PROBLEM

According to a first aspect, there is provided a control apparatus, connected to a plurality of first nodes in a network comprising: the plurality of first nodes controlled by the control apparatus in a centralized manner; and a second node(s) storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination and causing the first nodes connected to the second node(s) to transmit a destination learning packet to the second node(s) to cause the second node(s) to learn information about an address(es) to which packets can be forwarded from a port(s) of the second node(s) at predetermined time intervals.

According to a second aspect, there is provided a communication system, comprising: a plurality of first nodes controlled by a control apparatus in a centralized manner; a second node(s) storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination; and a control apparatus causing the first nodes connected to the second node(s) to transmit a destination learning packet to the second node(s) to cause the second node(s) to learn information about an address(es) to which packets can be forwarded from a port(s) of the second node(s) at predetermined time intervals.

According to a third aspect, there is provided a node control method, causing a control apparatus, which is connected to a plurality of first nodes in a network comprising: the first nodes controlled by the control apparatus in a centralized manner; and a second node(s) storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination, to perform steps of: generating a destination learning packet to cause the second node(s) to learn information about an address(es) to which packets can be forwarded from a port(s) of the second node(s) based on information collected from the first nodes; and causing the first nodes connected to the second node(s) to transmit the destination learning packet to the second node(s) at predetermined time intervals. This method is associated with a certain machine, namely, with the control apparatus that controls nodes in a centralized manner.

According to a fourth aspect, there is provided a program, causing a computer mounted on a control apparatus, which is connected to a plurality of first nodes in a network comprising: the first nodes controlled by the control apparatus in a centralized manner; and a second node(s) storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination, to perform processing for: generating a destination learning packet to cause the second node(s) to learn information about an address(es) to which packets can be forwarded from a port(s) of the second node(s) based on information collected from the first nodes; and causing the first nodes connected to the second node(s) to transmit the destination learning packet to the second node(s) at predetermined time intervals. This program can be recorded in a computer-readable (non-transient) storage medium. Namely, the present invention can be embodied as a computer program product.

### ADVANTAGEOUS EFFECTS OF INVENTION

The present invention can contribute to prevention of occurrence of phenomena such as non-arrival of packets when non-compatible apparatuses are connected to a centralized-control-type network.

### BRIEF DESCRIPTION OF THE DRAWINGS

Fig. 1 illustrates a configuration according to an exemplary embodiment of the present invention.
Fig. 2 illustrates aging processing that has been performed in a second node in Fig. 1.
Fig. 3 illustrates an operation according to an exemplary embodiment of the present invention.
Fig. 4 illustrates a configuration of a communication system according to a first exemplary embodiment of the present invention.
Fig. 5 illustrates a MAC address table stored in a non-OFS according to the first exemplary embodiment of the present invention.
Fig. 6 is a sequence diagram illustrating an operation according to the first exemplary embodiment of the present invention.
Fig. 7 illustrates a configuration of a communication system according to a second exemplary embodiment of the present invention.
Fig. 8 illustrates an operation of the communication system according to the second exemplary embodiment of the present invention.
Fig. 9 is a diagram that follows Fig. 8.
Fig. 10 is a diagram that follows Fig. 9.

### MODES FOR CARRYING OUT THE INVENTION

First, an outline of an exemplary embodiment of the present invention will be described with reference to the drawings. In the following outline, various components are denoted by reference characters for the sake of convenience. Namely, the following reference characters are merely used as examples to facilitate understanding of the present invention, not to limit the present invention to the illustrated modes.

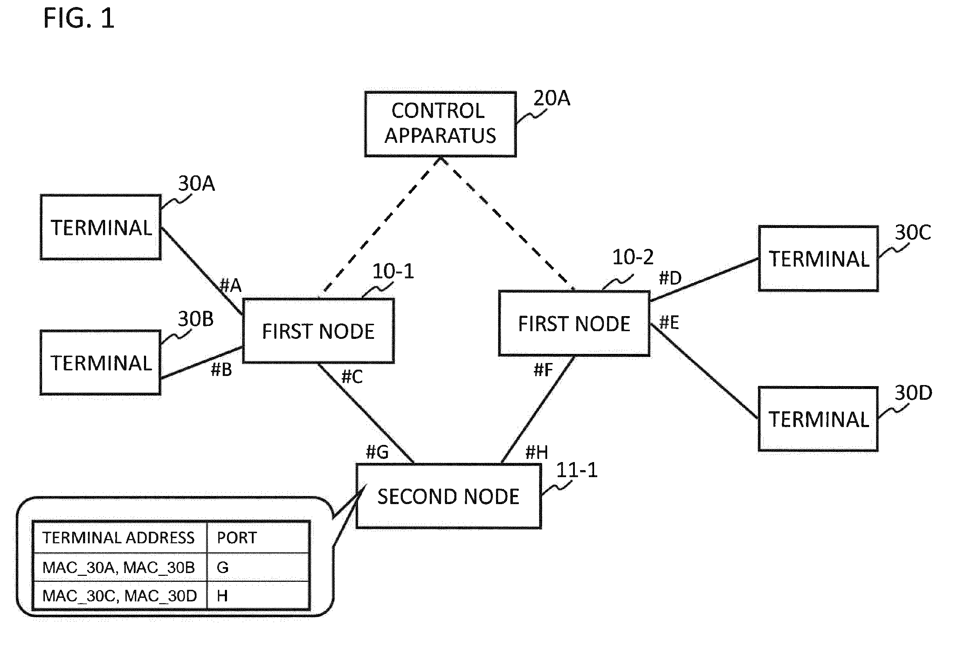

As illustrated in Fig. 1, an exemplary embodiment of the present invention can be realized by a configuration that includes: a plurality of first nodes 10-1 and 10-2 controlled by a control apparatus 20A in a centralized manner; a second node 11-1 storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination; and the control apparatus 20A. Reference characters #A to #H in Fig. 1 represent port numbers of the nodes.

More specifically, by controlling the first nodes 10-1 and 10-2 connected to the second node 11-1, the control apparatus 20A causes these first nodes to transmit a destination learning packet to the second node 11-1 to cause the second node 11-1 to learn information about an address(es) to which packets can be forwarded from a port(s) of the second node at predetermined time intervals.

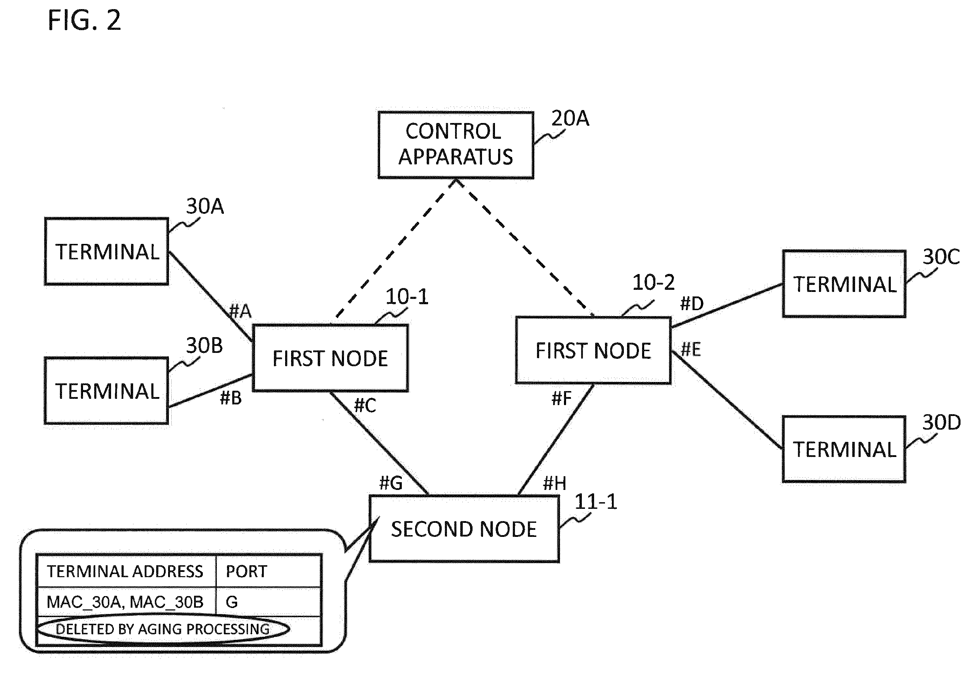

For example, as illustrated in the lower section in Fig. 1, if the second node stores entries in which its own ports and addresses of the terminals 30A to 30D are associated with each other, the destination learning packet is not transmitted, and forwarding using a certain entry (the entry including port H) is not performed for a predetermined time period, aging processing is performed, as illustrated in Fig. 2. As a result, if the second node 11-1 receives a packet addressed to the terminal 30C or 30D, the second node 11-1 cannot forward the packet.

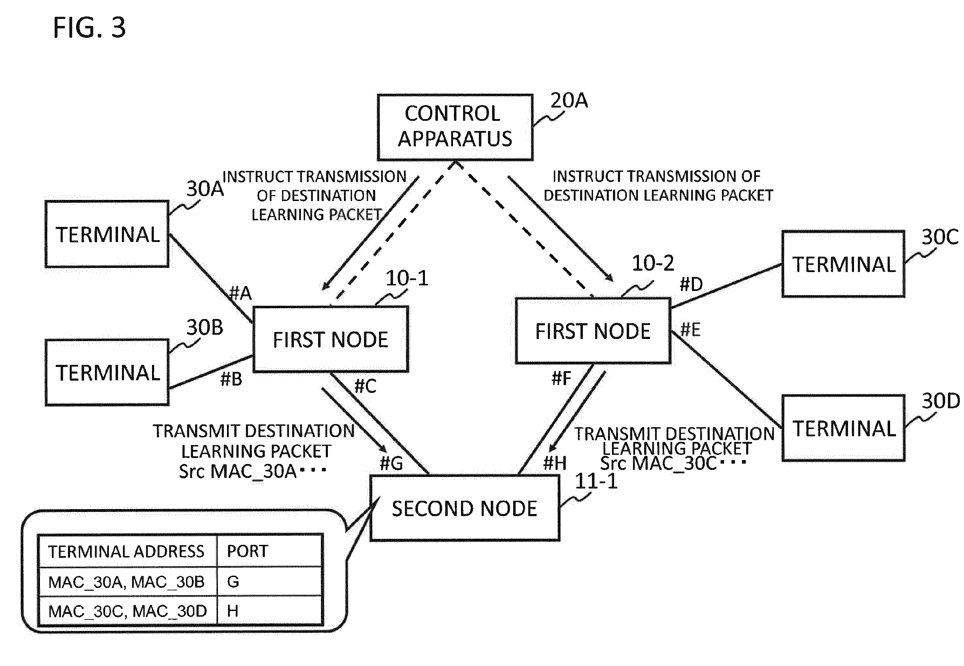

However, by causing the first nodes 10-1 and 10-2 to transmit a destination learning packet as described above, as illustrated in Fig. 3, the second node 11-1 maintains the entries in which its own ports and information about node addresses to which packets can be forwarded from the respective ports are associated with each other. As a result, non-arrival of packets, occurrence of unintended flooding, and the like can be prevented.

As described above, the control apparatus 20A is used in a network including: the first nodes 10-1 and 10-2 that are connected to the control apparatus 20A and that are controlled in a centralized manner by the control apparatus 20A; and the second node 11-1. The second node 11-1 stores, for a predetermined period, entries in each of which, based on a source address of a received packet, its own port and information about a node address(es) to which packets can be forwarded from the port are associated with each other, refers to the group of entries, and determines a port corresponding to a packet destination. The control apparatus 20A causes the first nodes connected to the second node to transmit a destination learning packet to the second node to cause the second node to learn information about an address(es) to which packets can be forwarded from a port(s) of the second node at predetermined time intervals.

### [First exemplary embodiment]

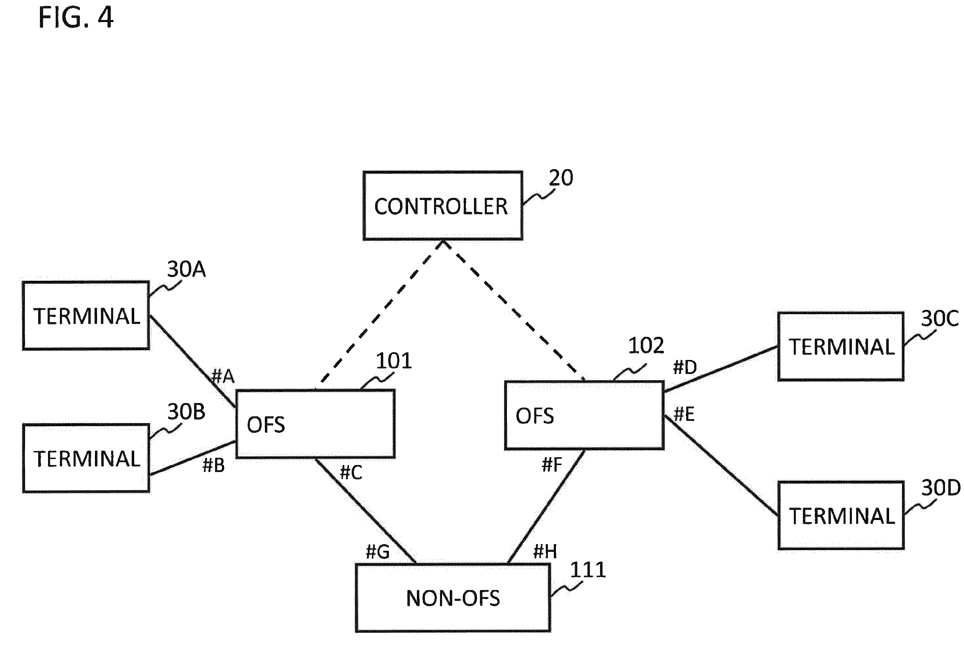

Next, a first exemplary embodiment of the present invention will be described in detail with reference to the drawings. Fig. 4 illustrates a configuration of a communication system according to the first exemplary embodiment of the present invention. As illustrated in Fig. 4, a non-OFS 111 such as a layer 2 switch is arranged between OFSs 101 and 102 that operate in the same way as the OpenFlow switches described in NON-PATENT LITERATURE 2. Reference characters #A to #H in Fig. 4 represent port numbers of these nodes.

Terminals 30A and 30B are connected to the OFS 101. When receiving a packet addressed to another terminal from the terminal 30A or 30B, the OFS 101 requests a controller 20 to set a flow entry (a Packet-In message in NON-PATENT LITERATURE 2). When receiving a flow entry from the controller 20, the OFS 101 forwards subsequent packets belonging to the same flow in accordance with the flow entry.

Terminals 30C and 30D are connected to the OFS 102. The OFS 102 operates in the same way as the OFS 101.

The controller 20 controls the OFSs 101 and 102 by using the OpenFlow protocol described in NON-PATENT LITERATURE 2. More specifically, when receiving a flow entry setting request (the Packet-In message in NON-PATENT LITERATURE 2) from the OFS 101 or 102, the controller 20 calculates a packet forwarding path based on information (a source, a destination, and the like) included in the flow entry setting request. Next, the controller 20 sets a flow entry realizing a packet forwarding operation in accordance with the packet forwarding path in the OFS 101 on the packet forwarding path. For example, if the OFS 101 receives a packet addressed to the terminal 30B from the terminal 30A and the controller 20 receives a flow entry setting request from the OFS 101, the controller 20 sets a flow entry for causing the OFS 101 to forward packets belonging to the corresponding flow from port #B of the OFS 101 in the OFS 101.

The controller 20 instructs the OFSs 101 and 102 connected to the non-OFS 111 to transmit a destination learning packet to the non-OFS 111 to cause the non-OFS 111 to learn MAC addresses of the terminals 30A to 30D at predetermined time intervals. The destination learning packet can be created, for example, based on network configuration information collected from the OFSs 101 and 102 (a connection relationship among the terminals, the OFSs, and the non-OFS, namely, a network topology) and connected-terminal information collected from the OFSs 101 and 102.

By setting shorter time intervals for transmission of the destination learning packet than an aging time-out period set in a MAC address table in the non-OFS 111, aging processing performed in the non-OFS 111 can be prevented. In contrast, if the flow statistical information or the like collected from the OFSs 101 and 102 indicates that occurrences of communication between certain apparatuses vary depending on date, time, or the like, the controller 20 may instruct the OFSs 101 and 102 to stop the transmissions of the destination learning packet for a predetermined period. In this way, the non-OFS 111 is allowed to perform aging processing in the MAC address table, and the number of entries stored in the non-OFS can be reduced.

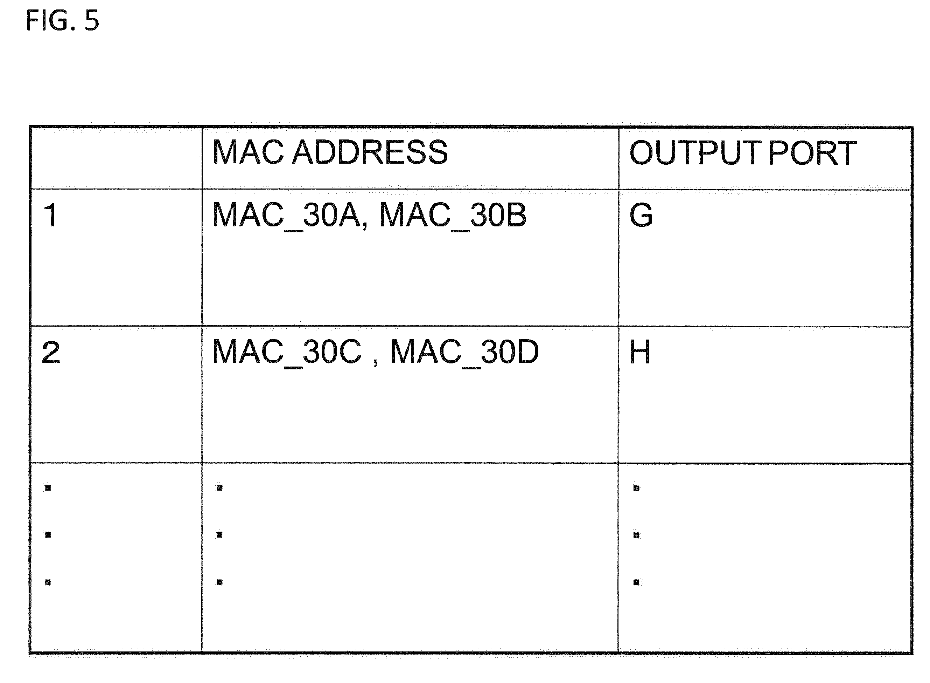

Fig. 5 illustrates a MAC address table in the non-OFS 111 maintained by transmission of the destination learning packet. In the example in Fig. 5, when receiving a packet indicating MAC_30A (a MAC address of the terminal 30A) or MAC_30B (a MAC address of the terminal 30B) as the destination MAC address, the non-OFS 111 transmits the packet from port #G. Likewise, when receiving a packet indicating MAC_30C (a MAC address of the terminal 30C) or MAC_30D (a MAC address of the terminal 30D) as the destination MAC address, the non-OFS 111 transmits the packet from port #H. In order to maintain such entries in the MAC address table, it is only necessary to allow the port #G of the OFS 111 to receive a packet indicating MAC_30A (the MAC address of the terminal 30A) or MAC_30B (the MAC address of the terminal 30B) as the source MAC address. For example, a Packet-out message described in NON-PATENT LITERATURE 2 can be used as an instruction for the transmission of the destination learning packet.

For example, if the OFS 101 receives a packet addressed to the terminal 30C from the terminal 30A and the controller 20 receives a flow entry setting request from the OFS 101, the controller 20 sets a flow entry for causing the OFS 101 to forward packets belonging to the corresponding flow from port #C of the OFS 101 in the OFS 101. In addition, the controller 20 sets a flow entry for causing the OFS 102 to forward packets belonging to the corresponding flow from port #D of the OFS 102 in the OFS 102. As described above, when the non-OFS 111 receives packets indicating MAC_30C (the MAC address of the terminal 30C) as the destination MAC address, the non-OFS 111 outputs the packets from the port #H. Thus, the packets addressed to the terminal 30C from the terminal 30A are sequentially forwarded to the terminal 30C via the OFS 101, the non-OFS 111, and the OFS 102 in this order.

The above functions of the controller 20 can be realized by a computer program that causes a computer constituting the controller 20 to use its hardware and to perform each of the above processing.

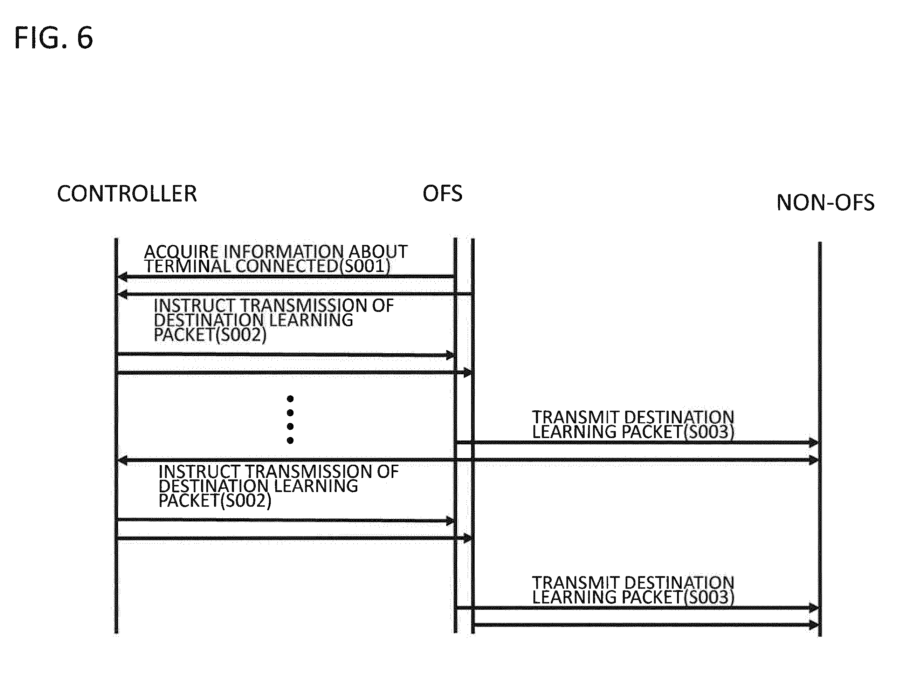

Next, an operation according to the present exemplary embodiment will be described in detail with reference to the drawings. Fig. 6 is a sequence diagram illustrating an operation according to the first exemplary embodiment of the present invention. As illustrated in Fig. 6, first, the OFSs 101 and 102 transmit information about terminals connected thereto to the controller 20 (step S001). For example, in the case of the network configuration illustrated in Fig. 4, the OFS 101 notifies the controller 20 that the OFS 101 is connected to the terminals 30A and 30B. Likewise, the OFS 102 notifies the controller 20 that the OFS 102 is connected to the terminals 30C and 30C.

Next, based on the information received in step S001, the controller 20 instructs the OFSs 101 and 102 to transmit a destination learning packet (step S002). As described above, the OFS 101 is connected to the terminals 30A and 30B and to port #G of the non-OFS. Thus, the controller 20 instructs the OFS 101 to transmit a destination learning packet indicating the MAC addresses of the terminals 30A and 30B as the source MAC addresses. Likewise, the controller 20 instructs the OFS 102 to transmit a destination learning packet indicating the MAC addresses of the terminals 30C and 30D as the source MAC addresses.

Next, the OFSs 101 and 102 transmit destination learning packets in accordance with the destination learning packet transmission instructions, respectively. More specifically, the OFS 101 transmits a destination learning packet indicating the MAC addresses of the terminals 30A and 30B as the source MAC addresses. Likewise, the OFS 102 transmits a destination learning packet indicating the MAC addresses of the terminals 30C and 30D as the source MAC addresses. As a result, the MAC address table in the non-OFS 111 stores the entries as illustrated in Fig. 5.

The above processing is continuously performed at predetermined time intervals. In the example in Fig. 6, only steps S002 and S003 are repeated. However, the sequence may be repeated from step S001 in a communication system in which the terminals 30A to 30D can be moved and connected to other OFSs. Alternatively, when the controller 20 transmits the instruction for transmitting a destination learning packet, the controller 20 may instruct the OFSs about a transmission cycle or the like so that the OFSs 101 and 102 can repeat only step S003 in accordance with the cycle.

Thus, according to the present exemplary embodiment, since the MAC address table in the non-OFS 111 can be maintained in an intended state, packets can be forwarded on a packet forwarding path created by the controller 20. In addition, flooding of ARP packets by the non-OFS 111 can be prevented.

### [Second exemplary embodiment]

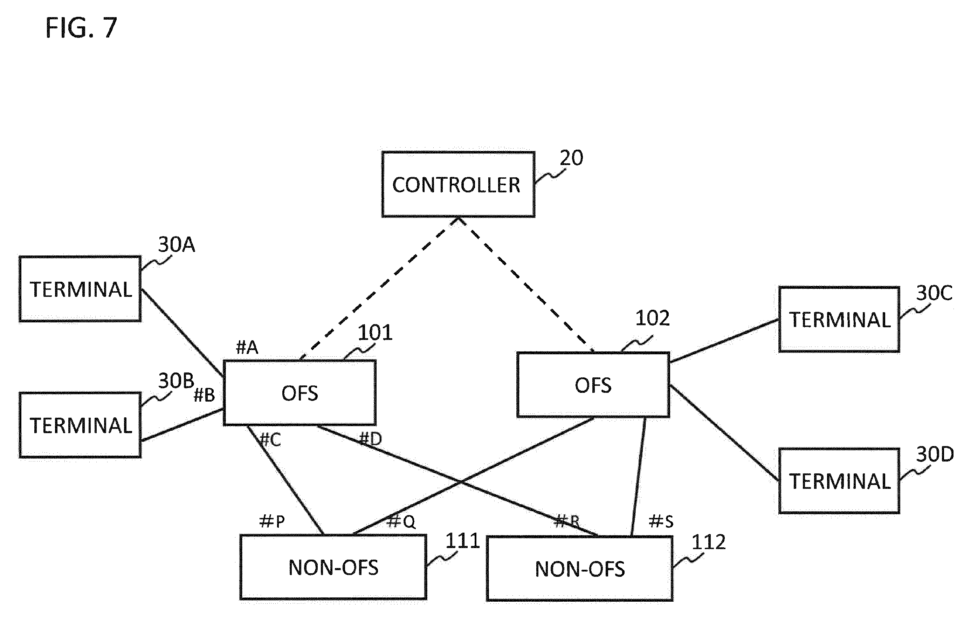

Next, a second exemplary embodiment will be described in detail with reference to the drawings. In the second exemplary embodiment, a controller performs load balancing by using a plurality of non-OFSs. Fig. 7 illustrates a configuration of a communication system according to the second exemplary embodiment of the present invention.

As illustrated in Fig. 7, a second non-OFS 112 is added between the OFSs 101 and 102 in the network configuration illustrated in Fig. 4. This configuration according to the present exemplary embodiment differs from that according to the first exemplary embodiment in that the non-OFS 112 is added. In addition, changes are made to the instruction for transmitting a destination learning packet given by the controller 20. Thus, the following description will be made with a focus on the differences.

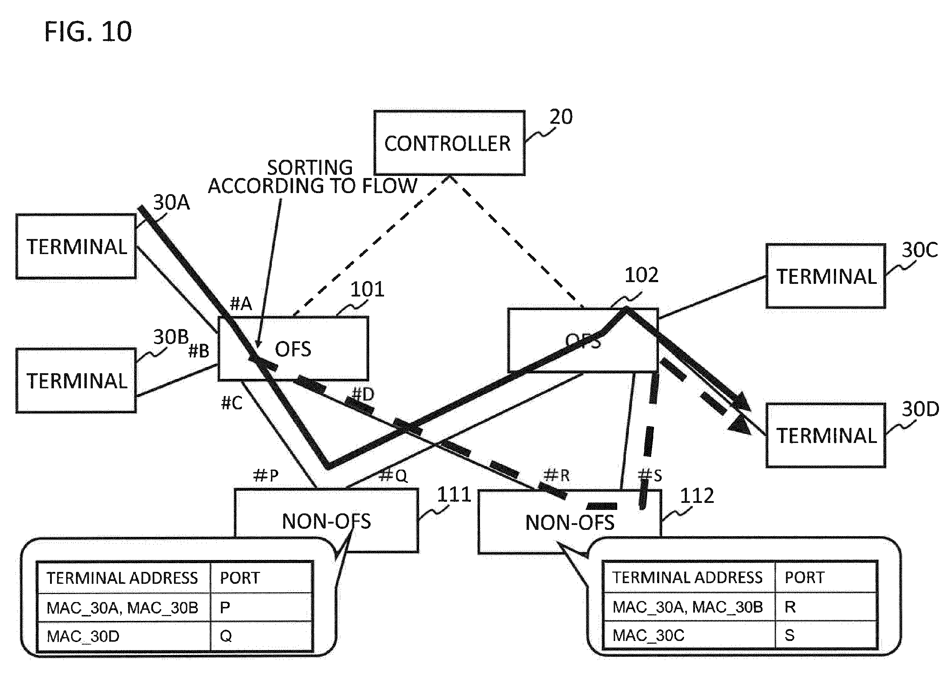

The present exemplary embodiment will be described based on an example in which the controller 20 causes the OFS 101 to sort packets addressed to the terminal 30D from a terminal 30A according to a flow type (an upper layer protocol, a service level, or the like) and to forward the sorted packets to the terminal 30D, as illustrated in Fig. 10.

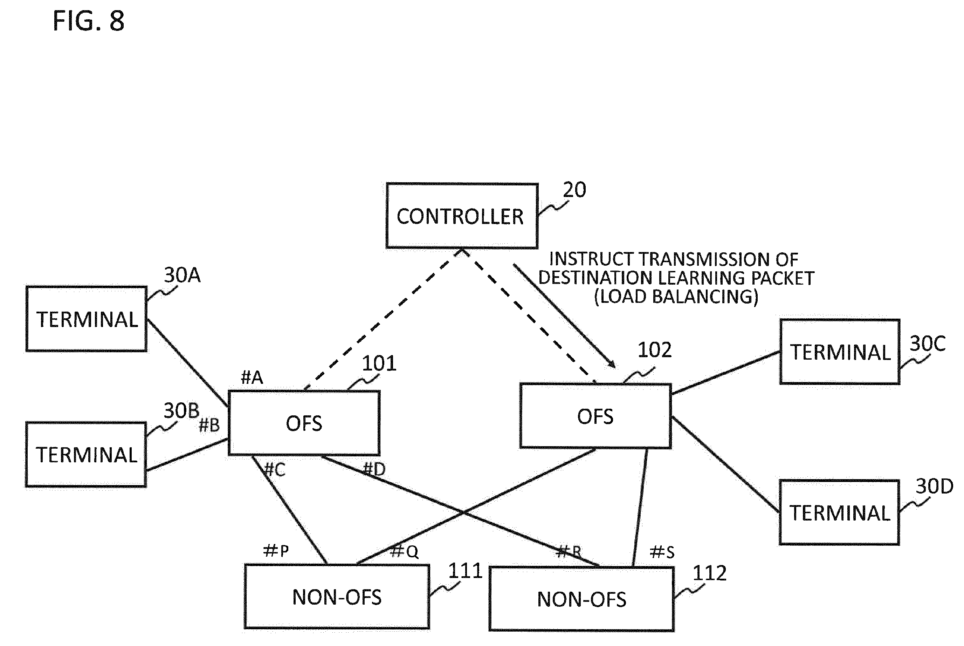

As illustrated in Fig. 8, based on terminal information previously received from the OFSs 101 and 102, the controller 20 instructs the OFS 102 to transmit a destination learning packet to each of the non-OFSs 111 and 112.

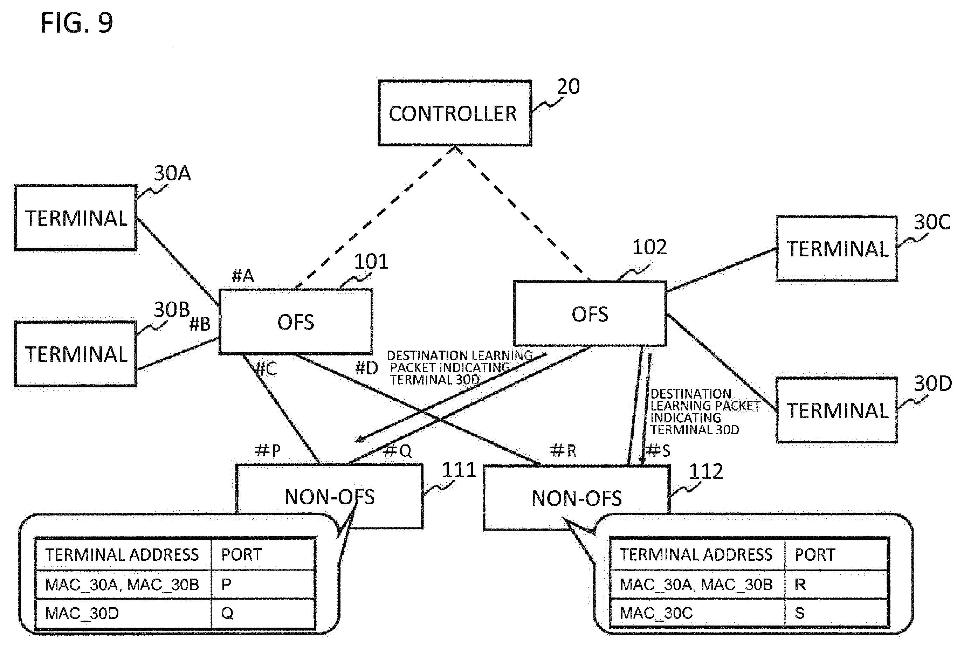

For example, as illustrated in Fig. 9, the controller 20 instructs the OFS 101 to transmit a destination learning packet indicating the MAC address of the terminal 30D as the source MAC address. Likewise, the controller 20 instructs the OFS 102 to transmit a destination learning packet indicating the MAC address of the terminal 30C as the source MAC address. As a result, the MAC address tables in the non-OFSs 111 and 112 store entries as illustrated in the lower section in Fig. 9.

In addition, the controller 20 sets a flow entry for causing the OFS 101 to forward packets that belong to flow A among the packets addressed to the terminal 30D from the terminal 30A from port #C of the OFS 101 and a flow entry for causing the OFS 101 to forward packets that do not belong to the flow A among the packets addressed to the terminal 30D from the terminal 30A from port #D of the OFS 101 in the OFS 101. In addition, the controller 20 sets a flow entry for causing the OFS 102 to forward the packets addressed to the terminal 30D from the terminal 30A from a port connected to the terminal 30D.

By setting the above flow entries, among the packets addressed to the terminal 30D from the terminal 30A, the packets that belong to flow A are forwarded on a path indicated by a thick solid line in Fig. 10 and the packets that do not belong to flow A are forwarded on a path indicated by a dashed line in Fig. 10. Namely, load balancing can be realized.

While exemplary embodiments of the present invention have thus been described, the present invention is not limited thereto. Further variations, substitutions, and adjustments can be made without departing from the basic technical concept of the present invention. For example, the network configurations described in the above exemplary embodiments are merely examples to facilitate understanding of the present invention. Namely, the present invention is not particularly limited thereto. For example, three or more OFSs/non-OFSs may be connected.

In addition, while an OFS in NON-PATENT LITERATURE 2 is used as each of the first nodes in the above first and second exemplary embodiments, an apparatus other than an OFS may be used, as long as the apparatus includes a function of storing flow entries and processing received packets or packets from an installed application in accordance with the flow entries and a function of transmitting a destination learning packet. For example, examples of such apparatus include a mobile phone terminal, a smartphone, a tablet terminal, a personal computer, a game machine, and a mobile router which have a switching function that achieves exchange of packets with an installed application.

The disclosure of each of the above PATENT LITERATURE and NON-PATENT LITERATUREs is incorporated herein by reference thereto. Modifications and adjustments of the exemplary embodiments and examples are possible within the scope of the overall disclosure (including the claims) of the present invention and based on the basic technical concept of the present invention. Various combinations and selections of various disclosed elements (including each element in each claim, exemplary embodiment, example, drawing, etc.) are possible within the scope of the claims and the drawings of the present invention. That is, the present invention of course includes various variations and modifications that could be made by those skilled in the art according to the overall disclosure including the claims and the technical concept.

### REFERENCE SIGNS LIST

- 10-1, 10-2: first node
- 11-1: second node
- 20: controller
- 20A: control apparatus
- 30A to 30D: terminal
- 101, 102: OFS
- 111, 112: non-OFS
- #A to #H, #P to #S: port number

## Claims

1. A control apparatus,
connected to a first node(s) in a network comprising: the first node(s) controlled by the control apparatus in a centralized manner; and a second node(s) storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination, wherein
said control apparatus causes the first node(s) connected to the second node(s) to transmit a destination learning packet to the second node(s) to cause the second node(s) to learn information about an address(es) to which packets can be forwarded from a port(s) of the second node(s) at predetermined time intervals.

2. The control apparatus according to claim 1;
wherein the control apparatus causes the first node(s) to transmit the destination learning packet at time intervals shorter than the period for which the entries are stored.

3. The control apparatus according to claim 1 or 2;
wherein the control apparatus has a means for updating a network topology including the first and second nodes based on information collected from the first node(s); and
wherein the control apparatus determines a content of the destination learning packet based on a position(s) of a port(s) of a second node(s) in the network topology and information about a terminal(s) connected to the first node(s).

4. The control apparatus according to any one of claims 1 to 3;
wherein the control apparatus causes the first node(s) to stop transmission of the destination learning packet based on flow statistical information collected from the first node(s).

5. The control apparatus according to any one of claims 1 to 4;
wherein, by causing the first node(s) to transmit a different destination learning packet to each of a plurality of second nodes arranged in parallel to each other, the control apparatus generates a plurality of packet forwarding paths that extend through the plurality of second nodes.

6. A communication system, comprising:
a first node(s) controlled by a control apparatus in a centralized manner;
a second node(s) storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination; and
a control apparatus causing the first node(s) connected to the second node(s) to transmit a destination learning packet to the second node(s) to cause the second node(s) to learn information about an address(es) to which packets can be forwarded from a port(s) of the second node(s) at predetermined time intervals.

7. A node control method, causing a control apparatus, which is connected to a first node(s) in a network comprising: the first node(s) controlled by the control apparatus in a centralized manner; and a second node(s) storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination, to perform steps of:
generating a destination learning packet to cause the second node(s) to learn information about an address(es) to which packets can be forwarded from a port(s) of the second node(s) based on information collected from the first node(s); and
causing the first node(s) connected to the second node(s) to transmit the destination learning packet to the second node(s) at predetermined time intervals.

8. A program, causing a computer mounted on a control apparatus, which is connected to a first node(s) in a network comprising: the first node(s) controlled by the control apparatus in a centralized manner; and a second node(s) storing, for a predetermined period, entries in each of which, based on a source address of a received packet, its own port and information about a node address(es) to which packets can be forwarded from the port are associated with each other and performing packet forwarding by referring to a group of entries and determining a port corresponding to a packet destination, to perform processing for:
generating a destination learning packet to cause the second node(s) to learn information about an address(es) to which packets can be forwarded from a port(s) of the second node(s) based on information collected from the first node(s); and
causing the first node(s) connected to the second node(s) to transmit the destination learning packet to the second node(s) at predetermined time intervals.
